(19) Europäisches Patentamt
European Patent Office
Office européen des brevets

(11) **EP 1 554 526 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
*F24F 12/00* (2006.01)  *F24F 11/00* (2006.01)

(21) Anmeldenummer: 03776798.5

(86) Internationale Anmeldenummer:
**PCT/DE2003/003464**

(22) Anmeldetag: **20.10.2003**

(87) Internationale Veröffentlichungsnummer:
**WO 2004/038300 (06.05.2004 Gazette 2004/19)**

(54) **LUFTAUSTAUSCHSYSTEM FÜR DIE BELÜFTUNG WENIGSTENS EINES RAUMES EINES GEBÄUDES**

AIR EXCHANGE SYSTEM FOR VENTILATING AT LEAST ONE ROOM OF A BUILDING

SYSTEME D'ECHANGE D'AIR DESTINE A LA VENTILATION AU MOINS D'UNE PIECE D'UN BATIMENT

(84) Benannte Vertragsstaaten:
**AT BE BG CH CY CZ DE DK EE ES FI FR GB GR HU IE IT LI LU MC NL PT RO SE SI SK TR**

(30) Priorität: **22.10.2002 DE 20216334 U**

(43) Veröffentlichungstag der Anmeldung:
**20.07.2005 Patentblatt 2005/29**

(60) Teilanmeldung:
**06008909.1 / 1 696 184**
**07020793.1**

(73) Patentinhaber: **Meltem Wärmerückgewinnung GmbH & Co. KG**
**82239 Alling (DE)**

(72) Erfinder: **REYNARTZ, Armin**
**82239 Alling (DE)**

(74) Vertreter: **Schweiger, Martin**
**Schweiger & Partner**
**Anwaltskanzlei**
**Karlstrasse 35**
**80333 München (DE)**

(56) Entgegenhaltungen:
**WO-A-01/84057**  **DE-A- 4 404 477**
**GB-A- 2 373 849**  **US-A- 5 257 736**
**US-A- 5 761 908**

**Beschreibung**

Die Erfindung betrifft ein Luftaustauschsystem für die Belüftung wenigstens eines Raums eines Gebäudes mit wenigstens einer Luftaustauschvorrichtung.

Zur Gewährleistung gleichbleibend hoher Atemluftqualität in Wohn- und Arbeitsräumen von Gebäuden wird oft ein Luftaustausch mit der Umwelt erzwungen. Dabei wird kühlere, unverbrauchte Außenluft in das Gebäudeinnere gefördert und gleichzeitig wärmere, verbrauchte Abluft aus dem Gebäudeinneren nach draußen gefördert.

Bei Räumen, bei denen ein solcher Luftaustausch stattfindet, treten an den Wänden häufig Schimmel und Stockflecken auf. Weiterhin nisten sich in solchen Räumen gerne Staubläuse ein, die Ursache für gesundheitliche Beschwerden bei sich in diesen Räumen aufhaltenden Personen sein können.

Die GB 2 373 849 A zeigt ein Luftaustauschsystem mit einem Zuluft-Lüfter und einem Fortluft-Lüfter, bei dem die Lüftergeschwindigkeit entsprechend der Feuchtigkeit oder des Kohlendioxydgehaltes innerhalb des Gebäudes gesteuert wird.

Die WO 01/84057 A1 zeigt ein Lüftungsgerät für die Lüftung von Raum zu Raum mit zwei Lüftern und einem Wärmetauscher sowie einer Kontrollsteuerung, die in Abhängigkeit von Sensorwerten die Drehgeschwindigkeit der Lüfter steuert.

In der US 5,761,908 wird ein Ventilationsgerät für Gebäude mit zwei Lüftern gezeigt, bei denen die Luftströme mit Partikelfiltern gereinigt werden.

Die US 5,257,736 zeigt ein Lüftungssystem, bei dem Sensoren die Konzentration von Luftverschmutzung, die Feuchtigkeit und negativen Druck der Luft innerhalb des Gebäudes messen.

In der DE 44 04 477 A1 wird ein Verfahren und eine Vorrichtung zum kombinierten Lüften, Heizen und Kühlen bereitgestellt, bei dem zwei Luftströme zwecks Wärmetausch über einen Kreuzwärmetauscher geführt werden.

Es ist daher Aufgabe der Erfindung, ein einfach handzuhabendes Luftaustauschsystem mit gutem Wirkungsgrad anzugeben, durch das eine gute Luftzirkulation in den belüfteten Räumen gewährleistet wird. Das Auftreten von Schimmel, von Stockflecken sowie von Staubläusen soll dabei verhindert werden.

Diese Aufgabe wird durch den Gegenstand der unabhängigen Ansprüche gelöst. Vorteilhafte Ausgestaltungen ergeben sich aus den jeweiligen Unteransprüchen.

Die Erfindung stellt ein Luftaustauschsystem für die Belüftung wenigstens eines Raums eines Gebäudes bereit, das wenigstens eine Luftaustauschvorrichtung und wenigstens einen Spurengassensor bzw. Wohlfühlsensor aufweist.

Die Luftaustauschvorrichtung umfaßt ein Gehäuse, einen in dem Gehäuse angeordneten elektrischen Zuluft-Lüfter, der einen Zuluftstrom von der Außenseite in das Innere des Gebäudes fördert, einen in dem Gehäuse angeordneten elektrischen Fortluft-Lüfter, der einen Abluftstrom aus dem Inneren auf die Außenseite des Gebäudes befördert sowie einen Wärmetauscher bzw. Wärmeübertrager, dessen Erwärm- oder Abkühlseite von dem Zuluftstrom und dessen Abkühl- oder Erwärmseite von dem Abluftstrom durchströmt werden. Diese Luftaustauschvorrichtung ist dabei vorzugsweise an einer Innenwand des Gebäudes befestigt, in der Rohrverbindungen vorgesehen sind, durch die der Abluftstrom auf die Außenseite des Gebäudes und der Zuluftstrom in das Gebäudeinnere strömen können.

Der Spurengassensor bzw. die Spurengassensoren befinden sich entweder im Inneren des Gebäudes oder in dem Gehäuse, insbesondere nahe einer Ablufteinlaßöffnung des Gehäuses. Der Spurengassensor bzw. die Spurengassensoren messen Konzentrationen von Spurengasen, insbesondere von $CO_2$ und von bestimmten Feststoffanteilen in der Luft und können den Zuluft-Lüfter und/oder der Fortluft-Lüfter in Abhängigkeit der gemessenen Spurengaskonzentrationen in Betriebszustände mit vorbestimmten, jeweils unterschiedlich ausgebildeten Drehfrequenzen schalten. Wenn beispielsweise eine zu hohe Spurengaskonzentration festgestellt wird, können der Zuluft-Lüfter und/oder der Fortluft-Lüfter ausgeschaltet werden. Mittels eines solchen Luftaustauschsystems kann die im Gebäude herrschende Luftqualität zeitnah erfaßt und verbessert werden.

Die Erfindung stellt auch ein Luftaustauschsystem mit wenigstens einer vorstehend beschriebenen Luftaustauschvorrichtung, mit einer Steuerungseinheit und mit wenigstens einem Innenluftfeuchtigkeitssensor oder mit wenigstens einem Zuluftfeuchtigkeitssensor zur Verfügung.

Der Innenluftfeuchtigkeitssensor ist dabei zur Anordnung auf der Innenseite des Gebäudes bestimmt und mißt die relative Luftfeuchtigkeit im Gebäudeinneren. Der Innenluftfeuchtigkeitssensor kann auch in dem Gehäuse der Luftaustauschvorrichtung, insbesondere nahe einer Ablufteinlaßöffnung des Gehäuses angeordnet sein. Ein in dem Gehäuse angeordneter Innenluftfeuchtigkeitssensor kann ebenfalls zuverlässig die aktuelle Luftfeuchtigkeit im Gebäudeinneren erfassen.

Der Zuluftfeuchtigkeitssensor ist entweder auf der Innenseite des Gebäudes oder in dem Gehäuse, insbesondere jeweils nahe einer Zuluftauslaßöffnung des Gehäuses angeordnet und mißt die relative Luftfeuchtigkeit des Zuluftstroms.

Bei der Anordnung des Innenluftfeuchtigkeitssensors, des Zuluftfeuchtigkeitssensors und/oder weiterer, nachfolgend beschriebener Sensoren im Inneren des Gehäuses des Luftaustauschsystems, ergibt sich der Vorteil, daß ein solches Luftaustauschsystem ohne eine zusätzlich nötige Sensormontage installiert und schnell in.Betrieb genommen werden kann.

Der Innenluftfeuchtigkeitssensor oder der Zuluftfeuchtigkeitssensor ist dabei mit der Luftaustauschvorrichtung so verbunden, daß der Zuluft-Lüfter in Abhängigkeit der von dem Innenluftfeuchtigkeitssensor oder von dem Zuluftfeuchtigkeitssensor gemessenen Werte in einen ersten Lüftungsbetriebszustand versetzt werden kann. Bei diesem ersten Lüftungsbetriebszustand ist der Zuluft-Lüfter entweder ganz ausgeschaltet, oder er dreht sich nur mit einer geringen Drehfrequenz, um eine Mindestbelüftung des Raums zu gewährleisten. Wenn im folgenden davon gesprochen wird, daß der Zuluft-Lüfter in einen Betriebszustand versetzt wird, so gilt das sinngemäß auch für den Fortluft-Lüfter.

Bei einer ersten Betriebsart des Luftaustauschsystems wird der Zuluft-Lüfter in den ersten Lüftungsbetriebszustand versetzt, wenn die gemessene relative Luftfeuchtigkeit im Inneren des Gebäudes oder des Zuluftstroms einen vorbestimmten Maximalwert überschreitet. Dies kann beispielsweise der Fall sein, wenn durch den Luftaustausch der Luftaustauschvorrichtung Zuluft mit einer hohen relativen und/oder absoluten Luftfeuchtigkeit von der Außenseite des Gebäudes in das Gebäudeinnere befördert wird. Durch diese Betriebsart wird ein ungewolltes Ansteigen der absoluten und/oder relativen Luftfeuchtigkeit im Inneren des Gebäudes vermieden. Eine typische Anwendung dieser ersten Betriebsart stellt das Belüften von Kellerräumen an warmen humiden Sommertagen dar.

Bei einer zweiten Betriebsart des Luftaustauschsystems wird der Zuluft-Lüfter in den ersten Lüftungsbetriebszustand versetzt, wenn die gemessene relative Luftfeuchtigkeit im Inneren des Gebäudes oder des Zuluftstroms einen vorbestimmten Minimalwert unterschreitet. Diese zweite Betriebsart kann vorzugsweise in trockenen Umgebungen, beispielsweise in der Wüste, gewählt werden, wenn ein ungewolltes Absinken der relativen und/oder absoluten Luftfeuchtigkeit im Innern des Gebäudes vermieden werden soll.

Bei den vorbestimmten, nicht zu über- bzw. unterschreitenden Maximal- und Minimalwerten der relativen Luftfeuchtigkeit kann jeweils ein Sicherheitszuschlag berücksichtigt sein. So kann der Maximalwert der relativen Luftfeuchtigkeit sicherheitshalber relativ niedrig gewählt werden, um das Auftreten von unangenehmer Feuchtigkeit und somit ein Ausfällen von Kondenswasser zuverlässig zu verhindern. Ebenso kann der Minimalwert der relativen Luftfeuchtigkeit sicherheitshalber relativ hoch angesetzt werden, um einem Austrocknen des Raumes wirkungsvoll entgegenzusteuern.

Die erfindungsgemäße Steuerungseinheit ist betätigbar mit dem Zuluft-Lüfter verbunden und so ausgebildet, daß der Zuluft-Lüfter in vorgegebenen Zeitabständen, automatisch in einen zweiten Lüftungsbetriebszustand mit einer vorgegebenen Drehfrequenz versetzt wird, die gegenüber der Drehfrequenz des ersten Lüftungsbetriebszustands deutlich erhöht ausgebildet ist. Die Steuerungseinheit schaltet somit den Zuluft-Lüfter in definierten Zeitabständen ein bzw. versetzt ihn jeweils in einen Lüftungsbetriebszustand, bei dem eine bessere Lüftung als bei der Minimallüftung des ersten Lüftungsbetriebszustands gewährleistet wird. Solch eine intervallmäßige Einschaltung wird auch als "Schnüffelbetrieb" bezeichnet.

Diese Einschaltung kann in bestimmten Frequenzen oder uhrzeitabhängig erfolgen. Beispielsweise kann nachts ein kürzeres Zeitintervall für die Einschaltung bzw. für das Versetzen des Zuluft-Lüfters in den zweiten Lüftungsbetriebszustand vorgesehen werden als tagsüber. Die Einschaltung bzw. das Versetzen des Zuluft-Lüfters in den zweiten Lüftungsbetriebszustand kann auch turnusmäßig erfolgen, beispielsweise kann im Sommer ein kürzeres Einschaltintervall als im Winter vorgesehen werden.

Beim "Schnüffelbetrieb" kann eine Mindestlaufzeit für den Zuluft-Lüfter vorgegeben werden. Dann läuft auch im Falle, daß eine zu hohe bzw. zu niedrige Luftfeuchtigkeit festgestellt wird, der Zuluft-Lüfter über einen definierten Zeitraum weiter, bevor er wieder ausgeschaltet bzw. wieder in den ersten Lüftungsbetriebszustand versetzt wird.

Es ist ebenfalls möglich, daß weitere Lüftungsbetriebszustände mit unterschiedlich ausgeprägten Drehfrequenzen vorgesehen' sind, in die der Zuluft-Lüfter in Abhängigkeit von weiteren vordefinierten Meßwerten des Innenluftfeuchtigkeitssensors oder des Zuluftfeuchtigkeitssensors versetzt werden kann. Auch der Fortluft-Lüfter kann bei den unterschiedlichen Lüftungsbetriebszuständen jeweils unterschiedliche Drehfrequenzen annehmen.

Bei diesem erfindungsgemäßen Luftaustauschsystem werden eine günstige Luftzirkulation gewährleistet und gleichzeitig ein unerwünschtes Ansteigen oder Absinken der absoluten und/oder relativen Luftfeuchtigkeit im Gebäudeinneren vermieden. Durch die beschriebene erste Betriebsart des erfindungsgemäßen Luftaustauschsystems kann sehr zuverlässig verhindert werden, daß sich im Gebäudeinneren, insbesondere an den Innenwänden Kondenswasser sammelt, das Schimmel und Stockflecken verursachen kann. Durch eine individuelle Einstellung des die Betriebszustandsänderung auslösenden Maximal- und/oder Minimalwerts der Luftfeuchtigkeit kann das Luftaustauschsystem benutzerfreundlich an die jeweils herrschenden Rand- bzw. Umgebungsbedingungen angepaßt werden.

Bei einer ersten Ausführungsform des Luftaustauschsystems ist zusätzlich ein Innentemperatursensor zur Messung der Temperatur im Inneren des Gebäudes oder ein Zulufttemperatursensor zur Messung der Temperatur des Zuluftstroms vorgesehen. Diese Ausführungsform empfiehlt sich besonders dann, wenn der Innenluftfeuchtigkeitssensor oder der Zuluftfeuchtigkeitssensor ausschließlich die absolute Luftfeuchtigkeit erfassen. Dann können die relativen Luftfeuchtigkeiten sehr zuverlässig aus den Meßwerten des Innenluftfeuchtigkeitssensors und des Innentemperatursensors bzw. des Zuluftfeuchtigkeitssensors und des Zulufttemperatursensors bestimmt werden

Wenn ein Eingang bzw. mehrere Eingänge der Steuerungseinheit jeweils mit dem Innenluftfeuchtigkeitssensor und/oder mit dem Innentemperatursensor und/oder mit dem Zuluftfeuchtigkeitssensor und/oder mit dem Zulufttemperatursensor verbunden ist bzw. sind und wenigstens ein Ausgang der Steuerungseinheit mit der Zuluftaustauschvorrichtung bzw. mit dem Zuluft-Lüfter und/oder mit dem Fortluft-Lüfter der Luftaustauschvorrichtung verbunden ist, so übernimmt die Steuerungseinheit vorteilhafterweise die gesamte Steuerung der Lüftungsbetriebszustände des erfindungsgemäßen Luftaustauschsystems.

Es ist auch möglich, übliche Computersysteme als Steuerungseinheiten zu verwenden. Die erfindungsgemäße Steuerungslogik liegt in diesem Fall in Form eines auf dem Computersystem ablaufenden Computerprogramms vor. Diese Ausführungsform bietet den Vorteil, daß zum Betrieb des erfindungsgemäßen Luftaustauschsystems keine separate Steuerungseinheit angeschafft zu werden braucht, sondern hierzu auf ein bestehendes Computersystem zurückgegriffen werden kann.

Die Erfindung betrifft auch ein Luftaustauschsystem für die Belüftung wenigstens eines Raums eines Gebäudes, das zusätzlich zu der oben beschriebenen Luftaustauschvorrichtung wenigstens einen Außenluftfeuchtigkeitssensor, wenigstens einen Innentemperatursensor, eine Berechnungseinheit sowie eine Steuerungseinheit aufweist.

Der Außenluftfeuchtigkeitssensor befindet sich dabei auf der Außenseite des Gebäudes oder im Gehäuse der Luftaustauschvorrichtung, insbesondere nahe einer Außenlufteinlaßöffnung des Gehäuses. Der Außenluftfeuchtigkeitssensor mißt insbesondere die absolute Luftfeuchtigkeit auf der Außenseite des Gebäudes bzw. die Luftfeuchtigkeit des von der Außenseite des Gebäudes in die Luftaustauschvorrichtung strömenden Außenluftstroms.

Der Innentemperatursensor ist auf der Innenseite des Gebäudes oder im Gehäuse der Luftaustauschvorrichtung, insbesondere nahe einer Ablufteinlaßöffnung des Gehäuses angeordnet. Der Innentemperatursensor mißt die Temperatur im Inneren des Gebäudes bzw. die Temperatur des aus dem Gebäudeinneren in die Luftaustauschvorrichtung strömenden Abluftstroms.

Die Berechnungseinheit ist mit dem Außenluftfeuchtigkeitssensor und mit dem Innentemperatursensor verbunden und berechnet die zu erwartende relative Luftfeuchtigkeit des Zuluftstroms bzw. der auf die Innenseite des Gebäudes geförderten Luft aus den Meßwerten dieser beiden Sensoren voraus. Diese Vorausberechnung erfolgt insbesondere durch Interpolation unter Verwendung von Tabellen, beispielsweise unter Verwendung der Tabelle "Zustandsgrößen für gesättigte feuchte Luft bei gegebenem Gesamtdruck". Dabei wird von der Annahme ausgegangen, daß die auf die Innenseite des Gebäudes geförderte Luft unmittelbar die Temperatur der im Inneren des Gebäudes befindlichen Luft annimmt. Die derartige Berechnung der relativen Luftfeuchtigkeit aus Meßwerten eines Außenluftfeuchtigkeitssensors und eines Innentemperatursensors bei gegebenem Druck ist dem Fachmann bekannt und braucht hier nicht näher erläutert zu werden. Die Berechnungseinheit ist mit einer Steuerungseinheit verbunden, die ihrerseits mit dem Zuluft-Lüfter verbunden ist und diesen betätigen kann.

Gemäß einer ersten Betriebsart dieses Luftaustauschsystems schaltet die Steuerungseinheit den Zuluft-Lüfter in einen ersten Lüftungsbetriebszustand, bei dem die Drehfrequenz des Zuluft-Lüfters gleich Null oder als Mindestlüftungsdrehfrequenz ausgebildet ist, wenn die vorausberechnete relative Luftfeuchtigkeit des Zuluftstroms einen vorgebbaren ersten Maximalwert überschreitet. Die Steuerungseinheit schaltet den Zuluft-Lüfter in einen zweiten Lüftungsbetriebszustand, bei dem die Drehfrequenz des Zuluft-Lüfters größer als die Drehfrequenz des ersten Lüftungsbetriebszustands ausgebildet ist, wenn die vorausberechnete relative Luftfeuchtigkeit des Zuluftstroms unter einen vorgegebenen, vorzugsweise unter dem ersten Maximalwert liegenden zweiten Maximalwert sinkt. Dies ist beispielsweise dann der Fall, wenn die vorausberechnete relative Luftfeuchtigkeit des Zuluftstroms unkritisch und nicht zu hoch ausgeprägt ist.

Diese erste Betriebsart wird dann gewählt, wenn ein übermäßiges Ansteigen der Luftfeuchtigkeit nicht erwünscht ist, beispielsweise wenn ein kalter Keller im Sommer mit warmer und/oder feuchter Außenluft belüftet wird.

Bei einer zweiten Betriebsart dieses Luftaustauschsystems schaltet die Steuerungseinheit den Zuluft-Lüfter in den ersten Lüftungsbetriebszustand, wenn die vorausberechnete relative Luftfeuchtigkeit des Zuluftstroms einen ersten Minimalwert unterschreitet. Die Steuerungseinheit schaltet den Zuluft-Lüfter in den zweiten Lüftungsbetriebszustand, wenn die vorausberechnete relative Luftfeuchtigkeit des Zuluftstroms einen zweiten Minimalwert überschreitet, der höher als der erste Minimalwert ausgebildet ist. Dies ist beispielsweise dann der Fall, wenn ein Luftaustausch mit einer trockenen Umgebung erfolgt und die Luftfeuchtigkeit der Umgebung über den kritischen zweiten Minimalwert steigt.

Diese zweite Betriebsart ist dann angebracht, wenn das unerwünschte Absinken der Luftfeuchtigkeit verhindert werden soll, beispielsweise in sehr trockenen subtropischen bzw. tropischen Gegenden.

Beim Übergang von dem ersten in den zweiten Lüftungsbetriebszustand wird die Drehfrequenz gegenüber dem ersten Lüftungsbetriebszustand erhöht bzw. der Zuluft-Lüfter aus einem Pausenzustand wieder eingeschaltet.

Ein derart ausgebildetes Luftaustauschsystem verhindert sehr wirkungsvoll ein übermäßiges Ansteigen und Absinken der relativen Luftfeuchtigkeit auf der Innenseite des Gebäudes. Ein unerwünschtes Befeuchten des Innenraums sowie das Ausfällen von Kondenswasser, das Schimmel, Stockflecken und das Einnisten von Staubläusen verursachen kann, wird genauso zuverlässig vermieden, wie ein Austrocknen im Gebäudeinneren.

Gemäß einem Grundgedanken der Erfindung wird die relative Luftfeuchtigkeit der auf die Innenseite des Gebäudes geförderten Luft nicht direkt gemessen, sondern aus den gemessenen Werten des Außenluftfeuchtigkeitssensors, des Innentemperatursensors und aus dem als bekannt vorausgesetzten herrschenden Druck vorausberechnet. Dadurch kann die zu erwartende relative Luftfeuchtigkeit bereits mit relativ großer Genauigkeit vorausberechnet werden. Diese Strategie hat den Vorteil, daß einer unerwünschten Entwicklung der relativen Luftfeuchtigkeit im Gebäudeinneren rechtzeitig entgegengesteuert werden kann. Des weiteren können die Minimal- und Maximalwerte für die beiden beschriebenen Lüftungsbetriebszustände individuell und umgebungsabhängig gewählt werden .Es können auch weitere Lüftungsbetriebszustände vorgesehen werden.

Das technisch aufwendige sowie energie- und kostenintensive Vorschalten eines Luftentfeuchters, durch welchen die Außenluft vor dem Eintreten in das Gebäude kontinuierlich strömt, kann somit entfallen. Auch die Kombination eines vorgeschalteten Luftentfeuchters mit einem Hygrostaten, der die relative Feuchte der Umgebung mißt und den Luftentfeuchter beim Überschreiten eines vorgegebenen Maximalwerts durch die relative Feuchte in Betrieb nimmt, ist dadurch nicht mehr nötig.

Gemäß einer ersten Ausführungsform der Erfindung ist weiterhin ein Innenluftfeuchtigkeitssensor zur Messung der insbesondere absoluten Luftfeuchtigkeit der Luft im Inneren des Gebäudes vorgesehen. Dieser Innenluftfeuchtigkeitssensor befindet sich entweder auf der Innenseite des Gebäudes oder in dem Gehäuse, insbesondere nahe einer Ablufteinlaßöffnung des Gehäuses. Dieser Innenluftfeuchtigkeitssensor ist mit der Berechnungseinheit verbunden.

Im Betrieb dieses Luftaustauschsystems können die Meßwerte des Innenluftfeuchtigkeitssensors und/oder die Volumina des Zuluft- und des Abluftstroms von der Berechnungseinheit bei der Berechnung der zu erwartenden relativen Luftfeuchtigkeit der auf die Innenseite des Gebäudes geförderten Luft berücksichtigt werden. Diese Volumina können auch als Kenngrößen des Zuluft- und des Fortluft-Lüfters vorliegen, beispielsweise als Drehzahl und als durch den jeweiligen Lüfter förderbares Luftvolumen pro Drehfrequenz und pro Zeiteinheit.

Dadurch läßt sich eine noch präzisere Vorhersage über die absolute Luftfeuchtigkeit der in das Gebäudeinnere gelangenden Zuluft bestimmen, wobei der mit der Abluft herausbeförderte Wasserdampf gegengerechnet wird.

Wenn weiterhin ein zur Messung der Temperatur auf der Außenseite des Gebäudes bestimmter und mit der Berechnungseinheit verbundener Außentemperatursensor vorgesehen ist, kann die relative Luftfeuchtigkeit der auf die Innenseite des Gebäudes geförderten Luft noch exakter vorausberechnet werden. Dieser Außentemperatursensor kann auf der Außenseite des Gebäudes oder im Gehäuse der Luftaustauschvorrichtung nahe einer Außenlufteinlaßöffnung des Gehäuses angeordnet sein. Bei dieser Ausführungsform der Erfindung kann der Außenluftfeuchtigkeitssensor auch als relativer Luftfeuchtigkeitssensor ausgebildet sein.

Die Erfindung betrifft auch ein Luftaustauschsystem für die Belüftung wenigstens eines Raums eines Gebäudes, das eine vorstehend beschriebene Luftaustauschvorrichtung, wenigstens einen Außenluftfeuchtigkeitssensor, wenigstens einen Innenluftfeuchtigkeitssensor, wenigstens einen Außentemperatursensor, wenigstens einen Innentemperatursensor, eine Berechnungseinheit sowie eine mit der Berechnungseinheit oder/und mit der Luftaustauschvorrichtung verbundene Steuerungseinheit aufweist. Die genannten Sensoren können sich dabei auf der Außenseite des Gebäudes oder im Gehäuse der Luftaustauschvorrichtung jeweils nahe einer Öffnung des Gehäuses befinden.

Die Berechnungseinheit ist bei dieser Erfindungsvariante mit allen genannten Sensoren verbunden und berechnet die zu erwartende relative Luftfeuchtigkeit der gesamten auf der Innenseite des Gebäudes befindlichen Luft aus den Meßwerten dieser Sensoren, aus dem bekannten Volumen des Raums und aus den über die Kennzahlen, insbesondere über die Drehfrequenzen des Zuluft-Lüfters und des Fortluft-Lüfters bestimmbaren Volumina des Zuluftstroms und des Abluftstroms. Diese Berechnung ist dem Fachmann bekannt und braucht hier nicht weiter erläutert zu werden.

Die Steuerungseinheit betätigt den Zuluft-Lüfter derart, daß er den bereits beschriebenen ersten Lüftungsbetriebszustand einnimmt, wenn die zu erwartende relative Luftfeuchtigkeit der auf der Innenseite des Gebäudes befindlichen Luft einen vorgegebenen ersten Maximalwert überschreitet oder einen ersten Minimalwert unterschreitet.

Die Steuerungseinheit versetzt den Zuluft-Lüfter in den bereits beschriebenen zweiten Lüftungsbetriebszustand, wenn die zu erwartende relative Luftfeuchtigkeit der auf der Innenseite des Gebäudes befindlichen Luft einen vorgegebenen zweiten Maximalwert unterschreitet oder einen zweiten Minimalwert überschreitet.

Gemäß einem weiteren Grundgedanken der Erfindung wird durch die Berechnungseinheit die Luftfeuchtigkeit der gesamten im Inneren des Gebäudes befindlichen Luft vorausberechnet. Dabei erfolgt die Steuerung des Zuluft-Lüfters vorteilhafterweise basierend auf der tatsächlich im Gebäudeinneren herrschenden Luftfeuchtigkeit.

Wenn weiterhin wenigstens ein Außendrucksensor sowie wenigstens ein Innendrucksensor vorgesehen sind und die Meßwerte dieser Drucksensoren durch die Berechnungseinheit bei der Vorausberechnung der Luftfeuchtigkeit der im Inneren des Gebäudes befindlichen Luft berücksichtigt werden, werden eine noch genauere Bestimmung der zu erwartenden relativen Luftfeuchtigkeit im Gebäudeinneren und eine noch präzisere Steuerung des Zuluft-Lüfters erreicht.

In einer vorteilhaften Weiterbildung der Erfindung sind die Eingänge der Steuerungseinheit mit dem Außenluftfeuchtigkeitssensor und/oder mit dem Innenluftfeuchtigkeitssensor und/oder mit dem Außentemperatursensor und/oder mit dem Innentemperatursensor verbunden. Der Ausgang der Steuerungseinheit ist mit der Luftaustauschvorrichtung bzw. mit dem Zuluft-Lüfter und/oder mit dem Fortluft-Lüfter verbunden. Diese Verbindungen können in Form von Draht- oder in Form von Funkverbindungen vorliegen. Eine solche zentrale Steuerungseinheit kann auch besonders vorteilhaft als gängiges Computersystem ausgebildet sein, wodurch das Anschaffen einer separaten Steuerungseinheit vermieden werden kann.

Das erfindungsgemäße Luftaustauschsystem kann vorteilhafterweise so ausgebildet sein, daß neben dem Zuluft-Lüfter auch der Fortluft-Lüfter durch die Steuerungseinheit in verschiedene Betriebszustände versetzt wird.

Jedes der vorstehend erläuterten Luftaustauschsysteme kann auch im bereits beschriebenen "Schnüffelbetrieb" angewendet werden. Insbesondere können der Zuluft-Lüfter und/oder der Fortluft-Lüfter aus einem anliegenden ersten Lüftungsbetriebszustand in regelmäßigen Zeitintervallen quasi versuchsweise wieder angeschaltet werden und dann wenigstens für einen kurzen Zeitraum in einem Lüftungsbetriebszustand mit höheren Lüfterdrehfrequenzen laufen.

Bei jedem der vorgenannten Luftaustauschsysteme kann zusätzlich wenigstens ein Spurengassensor bzw. Wohlfühlsensor vorgesehen sein, der sich entweder im Inneren des Gebäudes oder in dem Gehäuse, insbesondere nahe einer Ablufteinlaßöffnung des Gehäuses befindet. In Abhängigkeit der von dem Spurengassensor bzw. von den Spurengassensoren gemessenen Spurengaskonzentrationen können der Zuluft-Lüfter und/oder der Fortluft-Lüfter in Betriebszustände mit vorbestimmten, jeweils unterschiedlich ausgebildeten Drehfrequenzen geschaltet werden, beispielsweise in den ersten oder in den zweiten beschriebenen Lüftungsbetriebszustand. Bei einer zu hohen oder zu niedrigen Spurengaskonzentration können der Zuluft-Lüfter und/oder der Fortluft-Lüfter ausgeschaltet werden. Durch eine solche Steuerung des Luftaustauschsystems kann die im Gebäude herrschende Luftqualität verbessert werden.

Dabei ist eine komfortable Priorisierung durch den Benutzer möglich, der entscheiden kann, ob die Steuerung des Luftaustauschsystems primär anhand der gemessenen oder vorausberechneten Luftfeuchtigkeiten oder anhand der gemessenen Spurengaskonzentrationen erfolgen soll.

Es ist auch möglich, das erfindungsgemäße Luftaustauschsystem so vorzusehen, daß die Drehfrequenz und/oder der Anstellwinkel der Lüfterblätter des Zuluft-Lüfters sowie des Fortluft-Lüfters so einstellbar sind, daß sie einen tageszeitabhängigen Luftfeuchtigkeitsverlauf und Temperaturverlauf im Inneren des Gebäudes berücksichtigen. Dabei werden beispielsweise das Abkühlen eines Kellerraums in der Nacht berücksichtigt und der Maximalwert der relativen Luftfeuchtigkeit im Inneren des Gebäudes tagsüber relativ niedrig eingestellt, so daß ein Ausfällen von Kondenswasser in der Nacht vermieden wird.

Die Luftaustauschvorrichtung kann ferner eine Kontroll-Leuchte aufweisen, die aufleuchtet, wenn der Zuluft-Lüfter in Folge der vorstehend beschriebenen Entfeuchtungs- oder Enttrocknungsgefahr ausgeschaltet oder in einen ersten Lüftungsbetriebszustand heruntergeschaltet wird.

Schließlich ist es auch möglich, eine Isolierung beim Außenluftzufuhrrohr oder um dieses Außenluftzufuhrrohr herum anzubringen. Falls zwischen der Innen- und der Außenseite des Gebäudes eine große Temperatur- oder Luftfeuchtigkeitsdifferenz besteht, so wird durch eine solche Isolierung ein zu rapides Abkühlen und somit ein Ausfällen von Kondenswasser des Außenluftstroms vermieden.

Die Erfindung ist in den Zeichnungen anhand eines Ausführungsbeispiels näher veranschaulicht.

Figur 1      zeigt eine schematische Darstellung einer Draufsicht auf eine Luftaustauschvorrichtung,

Figur 2      zeigt eine schematische, perspektivische Darstellung des in Figur 1 gezeigten Plattenwärmetauschers sowie eine grafische Veranschaulichung der den Plattenwärmetauscher durchfließenden Luftströme,

Figur 3      zeigt eine schematische Darstellung eines Querschnitts entlang der Schnittlinie A-A der ah einer Außenwand befestigten Luftaustauschvorrichtung aus Figur 1,

Figur 4      zeigt eine schematische Darstellung eines Querschnitts entlang der Schnittlinie B-B der an der Außenwand befestigten Luftaustauschvorrichtung aus Figur 1,

Figur 5      zeigt eine schematische Darstellung eines Wohnhauses sowie eines in dem Wohnhaus angeordneten Luftaustauschsystems gemäß Figur 1.

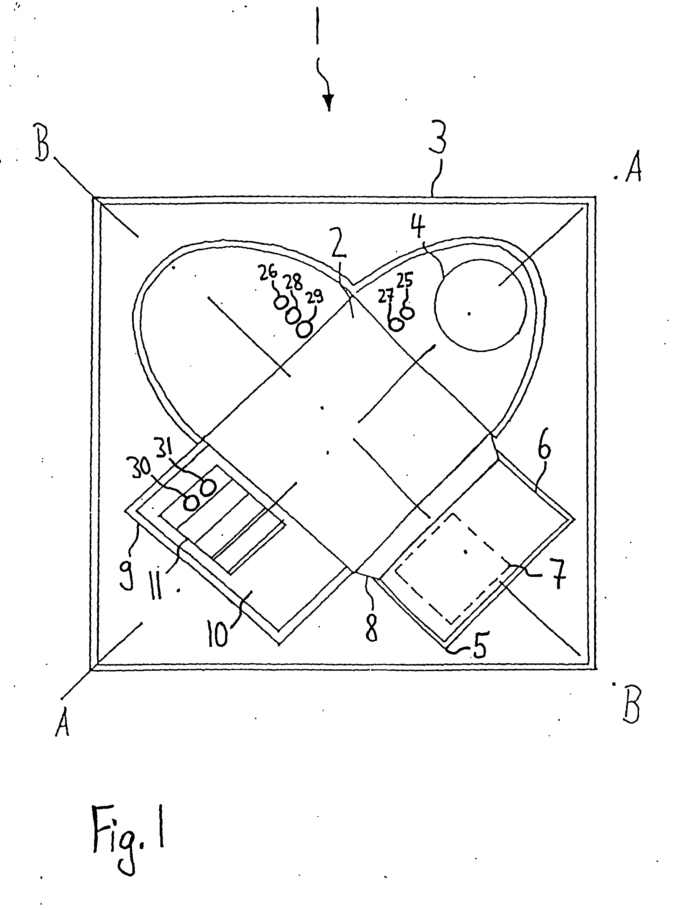

Figur 1 zeigt eine schematische Darstellung einer Draufsicht auf eine Luftaustauschvorrichtung 1.

Die Luftaustauschvorrichtung 1 ist von einem quadratischen Gehäuse 3 umschlossen. Bei der in Figur 1 gezeigten Draufsicht ist die Vorderseite des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Material, wobei in der Draufsicht gemäß Figur 1 nur die oberste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist zu dem Gehäuse 3 um einem Winkel von 45˚ gedreht.

Oberhalb der rechten oberen Seite des Plattenwärmetauschers 2 ist eine kreisrunde Außenlufteinlaßöffnung 4 in der Unterseite des Gehäuses 3 vorgesehen. Um die Außenlufteinlaßöffnung 4 ist eine auf der Unterseite des Gehäuses 3 aufsetzende,' gekrümmte Wand vorgesehen, die am oberen sowie am unteren Ende der rechten oberen Seite des Plattenwärmetauschers 2 abschließt. Zwischen der rechten oberen Seite des Plattenwärmetauschers 2 und der Außenlufteinlaßöffnung 4 befinden sich ein erster Außenluftfeuchtigkeitssensor 25 zur Messung der Luftfeuchtigkeit der in das Gehäuse einströmenden Außenluft und ein erster Außentemperatursensor 27 zur Messung der Temperatur der in das Gehäuse einströmenden Außenluft.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt. In der hier nicht gezeigten Vorderseite des Gehäuses 3 ist eine Öffnung vorgesehen, die beim Aufsetzen der Vorderseite auf das Gehäuse 3 innerhalb dieser Wand angeordnet ist. Zwischen dieser Öffnung und der linken oberen Seite des Plattenwärmetauschers 2 befinden sich ein erster Innenluftfeuchtigkeitssensor 26 zur Messung der Luftfeuchtigkeit der in das Gehäuse 3 einströmenden Abluft, ein erster Innentemperatursensor 28 zur Messung der Temperatur der in das Gehäuse 3 einströmenden Abluft sowie ein erster Wohlfühlsensor 29 zur Messung von Spurengaskonzentrationen in der Abluft.

An der rechten unteren Seite des Plattenwärmetauschers 2 ist ein Fortluft-Lüftergehäuse 5 mit einem Fortluftradiallüfter 6 sowie ein zwischen dem Fortluftradiallüfter 6 und dem Plattenwärmetauscher 2 angeordneter Trichter 8 vorgesehen. Der Trichter 8 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30˚. Auf der gesamten Breite des Auslaßseite des Trichters 8 setzt der Fortluftradiallüfter 6 an, von dem in der Draufsicht in Figur 1 lediglich die Verkleidung erkennbar ist. Die Drehachse des Fortluftradiallüfters 6 ist dabei senkrecht auf der Höhe der Mitte der rechten unteren Seite des Plattenwärmetauschers 2 ausgerichtet. Der Drucksensor bzw. die Breite des Fortluftradiallüfters 6 entspricht dabei in etwa der Auslaßseite des Trichters 8. Die Tiefe des Fortluftradiallüfters 6 entspricht ungefähr der Hälfte seiner Breite. Der Fortluftradiallüfter 6 ist von einem Fortluft-Lüftergehäuse 5 umschlossen, das auf seiner Unterseite eine in Figur 1 gestrichelt dargestellte, rechteckige Fortluftauslaßöffnung 7 aufweist. Diese Fortluftauslaßöffnung 7 ist dabei, von der Mitte des Fortluftradiallüfters 6 ausgehend, etwas nach links unten versetzt angeordnet.

An der linken unteren Seite des Plattenwärmetauschers 2 setzt ein von einem dünnwandigen Zuluft-Lüftergehäuse 9 umschlossener Zuluftansaugradiallüfter 10 an. Dabei ist die Drehachse des Zuluftansaugradiallüfters 10 orthogonal zu der linken unteren Seite des Plattenwärmetauschers 2 auf der Höhe deren Mitte angeordnet. Der Durchmesser des Zulaufansaugradiallüfters 10 bzw. seine Breite entspricht in etwa der Seitenlänge des Plattenwärmetauschers 2, seine Tiefe entspricht ungefähr der Hälfte seiner Breite. In dem linken oberen Bereich des Zuluftansaugradiallüfters 10 ist eine rechteckige Zulufteinlaßöffnung 11 angeordnet, durch die mehrere Lüfterschaufeln des Zuluftansaugradiallüfters 10 erkennbar sind. Diese sind im Ausführungsbeispiel parallel zur Drehachse des Zuluftansaugradiallüfters 10 angeordnet, können jedoch auch schräg zu dieser oder gekrümmt verlaufen. In dem Bereich des Zuluftsaugradiallüfters 10 sind nahe der Zuluftauslaßöffnung 11 ein Zuluftfeuchtigkeitssensor 30 zur Messung der Luftfeuchtigkeit der aus dem Gehäuse 3 ausströmenden Zuluft und ein Zulufttemperatursensor 31 zur Messung der Temperatur der aus dem Gehäuse 3 ausströmenden Zuluft angeordnet.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

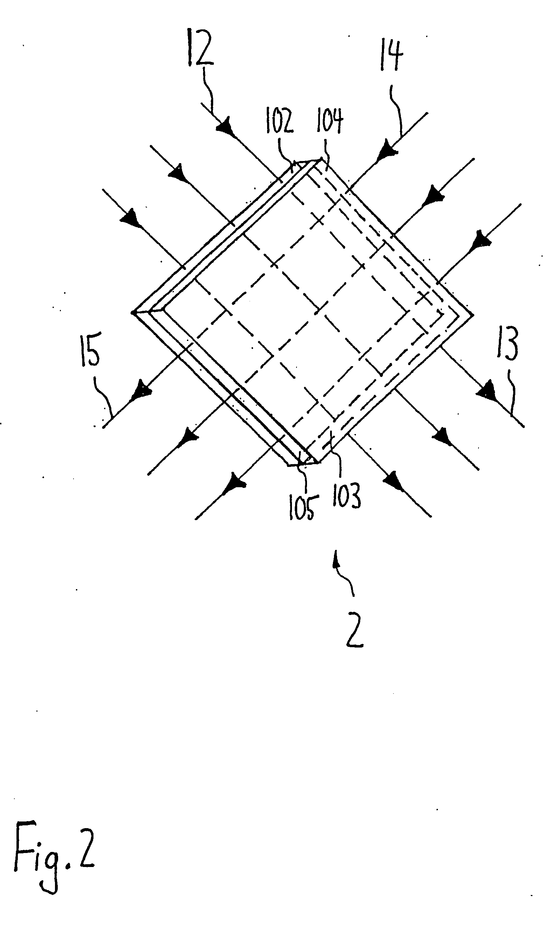

Figur 2 zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme.

Der Plattenwärmetauscher 2 umfaßt drei übereinander angeordnete, quadratische Metallplatten, die in Figur 2 jeweils auf einer Ecke stehend dargestellt sind. Die untere und die mittlere Platte des Plattenwärmetauschers 2 weisen auf der linken oberen Seite einen schlitzartigen Warmlufteinlaß 102 und auf der rechten unteren Seite einen schlitzartigen Kaltluftauslaß 103 auf. Auf der linken unteren sowie auf der rechten oberen Seite ist die untere Platte mit der mittleren Platte des Plattenwärmetauschers 2 jeweils mit einer durchgehenden Wand verbunden.

An der rechten oberen Seite des Plattenwärmetauschers 2 befindet sich zwischen der mittleren und der oberen Platte ein schlitzartiger Kaltlufteinlaß 104. An der linken unteren Seite des Plattenwärmetauschers 2 ist zwischen der mittleren und der oberen Platte des Plattenwärmetauschers 2 ein schlitzartiger Warmluftauslaß 105 vorgesehen. An der linken oberen sowie an der rechten unteren Seite des Plattenwärmetauschers 2 ist zwischen der mittleren und der oberen Platte jeweils eine Wand vorgesehen.

Gemäß der Darstellung in Figur 2 fließt ein Abluftstrom 12 in den Warmlufteinlaß 102 hinein, durchströmt den Plattenwärmetauscher 2 und tritt auf der gegenüberliegenden Seite als Fortluftstrom 13 aus dem Kaltluftauslaß 103 aus. Der dabei von dem Abluftstrom 12 durchflossene Bereich des Plattenwärmetauschers 2 wird auch als Abkühlseite bezeichnet. Ein Außenluftstrom 14 tritt durch den Kaltlufteinlaß 104 in den Plattenwärmetauscher 2 ein, durchströmt diesen und tritt als Zuluftstrom 15 auf der gegenüberliegenden Seite aus dem Warmluftauslaß 105 aus. Der dabei von dem Außenluftstrom 14 durchflossenen Bereich des Plattenwärmetauschers 2 wird auch Erwärmseite des Plattenwärmetauschers 2 genannt. Dabei wird vorliegend von der Annahme ausgegangen, daß die Außenluft kälter ist als die im Gebäude befindliche Luft. Die Luftaustauschvorrichtung ist selbstverständlich ebenfalls einsetzbar, wenn die Außenluft wärmer ist als die im Gebäude befindliche Luft. Dann sind die Erwärmseite und die Abkühlseite des Plattenwärmetauschers 2 sinngemäß vertauscht.

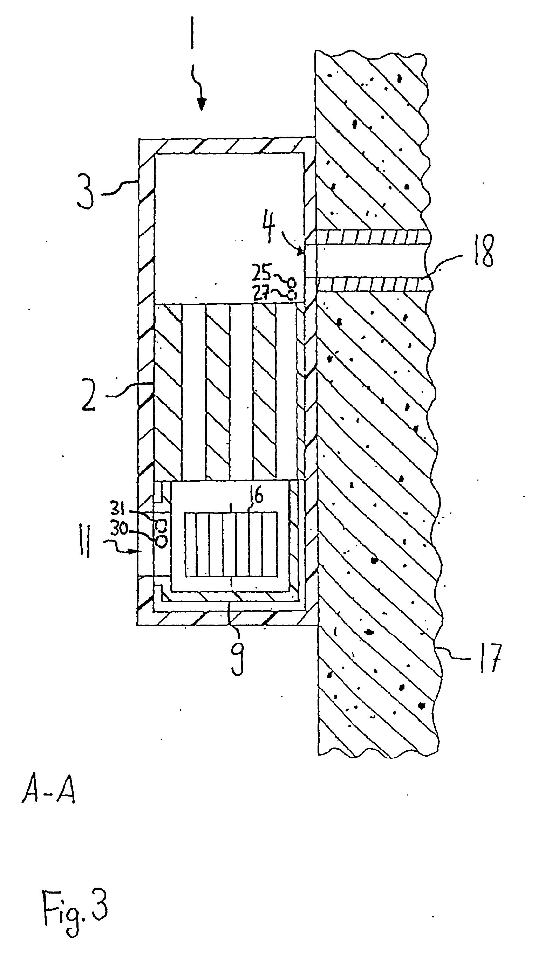

Figur 3 zeigt eine schematische Darstellung eines Querschnitts entlang der Schnittlinie A-A einer an einer Außenwand 17 befestigten Luftaustauschvorrichtung 1. In Figur 3 ist die Erwärmseite des Plattenwärmetauschers 2 betrachtet.

Die Luftaustauschvorrichtung 1 liegt mit der Rückseite ihres Gehäuses 3 an der Vorderseite der Außenwand 17 an und befindet sich dementsprechend im Gebäudeinneren. Aus der Querschnittsdarstellung in Figur 3 ist ersichtlich, daß die diagonale Höhe der Luftaustauschvorrichtung 1 in etwa dem Dreifachen ihrer Tiefe entspricht. Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 18 anschließt. Um dieses Außenluftzufuhrrohr 18 kann eine in Figur 3 nicht gezeigte Isolierung beispielsweise aus Schaumstoff vorgesehen sein, die ein zu rapides Abkühlen des Außenluftstroms 14 verhindert. Der erste Außenluftfeuchtigkeitssensor 25 und der erste Außentemperatursensor 27 sind zwischen der Außenlufteinlaßöffnung 4 und dem Plattenwärmetauscher 2 angeordnet.

In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf.

In dem Zuluftauslaßbereich ist ein Zuluft-Lüfterrad 16 innerhalb des Zuluft-Lüftergehäuses 9 angeordnet. Das Zuluft-Lüfterrad 16 ist dabei horizontal mittig angeordnet. Auf gleicher Höhe mit den Lüfterschaufeln des Zuluft-Lüfterrads 16 ist in der Vorderseite des Gehäuses 3 sowie in der linken Seite des Zuluft-Lüftergehäuses 9 eine Zuluftauslaßöffnung 11 vorgesehen, deren Höhe der Breite der Lüfterschaufeln entspricht. In einem Bereich der Zuluftauslaßöffnung 11 befinden sich der Zuluftfeuchtigkeitssensor 30 und der Zulufttemperatursensor 31.

Das Zuluft-Lüftergehäuse 9 setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

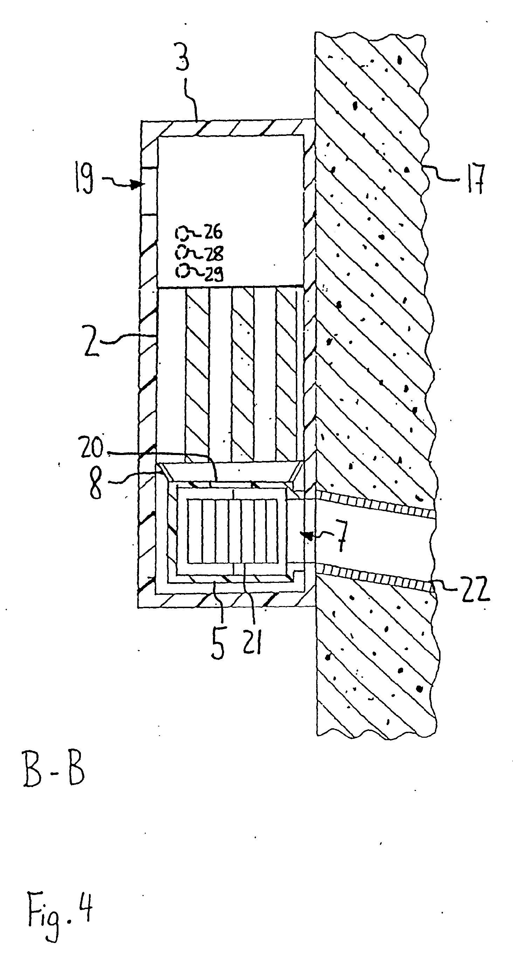

Figur 4 zeigt eine schematische Darstellung eines Querschnitts entlang der Schnittlinie B-B der an der Außenwand 17 befestigten Luftaustauschvorrichtung 1. In Figur 4 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich. Im Ablufteinlaßbereich ist eine Ablufteinlaßöffnung 19 auf der Vorderseite des Gehäuses 3 vorgesehen. Zwischen der Ablufteinlaßöffnung 19 und dem Plattenwärmetauscher 2 sind in Figur 4 der erste Innenluftfeuchtigkeitssensor 26, der erste Innentemperatursensor 28 sowie der erste Wohlfühlsensor 29 angeordnet. Im Plattenwärmetauscherbereich befindet sich der Plattenwärmetauscher 2, der vier parallele, vertikal verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf.

Der Fortluftauslaßbereich umfaßt einen hinsichtlich der Bauart, hinsichtlich der Größe und hinsichtlich der Ausrichtung mit dem in Figur 3 gezeigten Zuluft-Lüfterrad 16 identisches Fortluft-Lüfterrad 21. Das Fortluft-Lüfterrad 21 ist zentriert innerhalb des Fortluft-Lüftergehäuses 5 angeordnet. Horizontal auf gleicher Höhe mit dem Fortluft-Lüfterrad 21 weisen das Fortluft-Lüftergehäuse 5 auf der rechten Seite sowie das Gehäuse 3 auf seiner Rückseite jeweils eine Fortluftauslaßöffnung 7 auf. An dieser Fortluftauslaßöffnung 7 setzt ein Fortluftauslaßrohr 22 an, das leicht nach rechts unten geneigt verläuft. Mittig auf der Oberseite des Fortluft-Lüftergehäuses 5 ist eine Fortluftzuführungsöffnung 20 vorgesehen, deren Breite ungefähr einem Drittel der Gesamtbreite des Fortluft-Lüftergehäuses 5 entspricht. Zwischen dem linken und dem rechten Ende der Unterseite des Plattenwärmetauschers 2 und der linken und rechten Seite der Oberseite des Fortluft-Lüftergehäuses 5 ist der Trichter 8 angeordnet.

Es ist weiterhin eine in den Figuren 1 bis 4 nicht gezeigte, vorzugsweise an der Vorderseite des Gehäuses 3 angeordnete Steuerungseinheit vorgesehen, die mit den Sensoren 25-29, mit dem Zuluft-Lüfterrad 16 und mit dem Fortluft-Lüfterrad 21 verbunden ist. Dabei liegen die Sensoren 25-29 an den Eingängen und die Lüfterräder 16 und 21 an den Ausgängen der Steuerungseinheit.

Die Steuerungseinheit und die Luftaustauschvorrichtung 1 mit den Sensoren 25-29 bilden zusammen ein Luftaustauschsystem.

Im folgenden wird die prinzipielle Funktionsweise der Luftaustauschvorrichtung 1 erläutert.

Wie in Figur 2 beschrieben, besteht zwischen dem Abluftstrom 12 und dem Außenluftstrom 14 ein Temperaturgefälle, das im Betrieb der Luftaustauschvorrichtung 1 durch den Plattenwärmetauscher 2 reduziert wird. Dabei wird der Abluftstrom 12 abgekühlt und der Außenluftstrom 14 erwärmt. Der Abluftstrom 12 sondert bei der Abkühlung Kondenswasser ab, das an der Abkühlseite des Plattenwärmetauschers 2, insbesondere am Kaltluftauslaß 103 auftritt.

Wie in den Figuren 1 und 3 dargestellt, wird durch den Zuluftansaugradiallüfter 10 bzw. durch das Zuluft-Lüfterrad 16 kalte Außenluft angesaugt. Dieser Außenluftstrom 14 tritt durch das in Figur 3 gezeigte Außenluftzufuhrrohr 18 in die Luftaustauschvorrichtung 1 ein. Die Temperatur und die Luftfeuchtigkeit des Außenluftstroms 14 werden dabei von dem ersten Außenluftfeuchtigkeitssensor 25 und von dem ersten Außentemperatursensor 27 erfaßt. Dann strömt der Außenluftstrom 14 durch die Luftführungen des Plattenwärmetauschers 2 und wird dabei erwärmt. Anschließend fließt die nun als Zuluftstrom 15 bezeichnete, erwärmte Luft durch die Zuluftauslaßöffnung 11 auf der Gehäusevorderseite in das Gebäudeinnere. Dabei messen der Zuluftfeuchtigkeitssensor 30 und der Zulufttemperatursensor 31 die Feuchtigkeit und die Temperatur des Zuluftstroms 15.

Wie in Figur 1 und in Figur 4 ersichtlich, saugt der Fortluftradiallüfter 6 bzw. das Fortluft-Lüfterrad 21 durch die Bewegung der Lüfterschaufeln gleichzeitig dazu warme Abluft aus dem Gebäudeinneren an. Dieser Abluftstrom 12 fließt durch die Ablufteinlaßöffnung 19 in das Gehäuse 3 und an den Sensoren 26, 28 und 29 vorbei, welche die Feuchtigkeit, die Temperatur und die Spurengaskonzentration des Abluftstromes 12 messen. Anschließend durchströmt der Abluftstrom 12 die Luftführungen des Plattenwärmetauschers 2. Beim Durchströmen des Plattenwärmetauschers 2 wird der Abluftstrom 12 gekühlt. Der Abluftstrom 12 gelangt danach durch den Trichter 8 und durch die Fortluftzuführungsöffnung 20 in das Fortluft-Lüftergehäuse 5. Von dort aus wird die nun als Fortluftstrom 13 bezeichnete Luft durch die Fortluftauslaßöffnung 7 aus der Luftaustauschvorrichtung 1 sowie durch das Fortluftauslaßrohr 22 auf die Außenseite des Gebäudes befördert. Dies beruht auf der Bewegung des Fortluft-Lüfterrads 21 sowie auf der Druckdifferenz, die zwischen dem Innenraum des Fortluft-Lüfterrads 21 und dem außerhalb der Fortluftauslaßöffnung 7 gelegenen Bereich herrscht.

Nachfolgend wird die erfindungsgemäße Steuerung des Luftaustauschsystems anhand mehrerer Betriebsarten erklärt. Dabei sind die Drehfrequenzen des Zuluft-Lüfterrades 16 sowie des Fortluft-Lüfterrades 21 durch die Steuerungseinheit genau und unmittelbar einstellbar. Über die Drehfrequenzen des Zuluft-Lüfterrades 16 und des Fortluft-Lüfterrades 21 lassen sich der Zuluftstrom $\dot{V}_{zu}$ 15 und der Abluftstrom $\dot{V}_{ab}$ 12 genau bestimmen. Der auf der Innenseite sowie der auf der Außenseite der Außenwand 17 herrschende Gesamtdruck beträgt nachfolgend jeweils p = 100kPa.

In einem weiteren, hier nicht gezeigten Ausführungsbeispiel, bei dem der auf der Innenseite sowie der auf der Außenseite der Außenwand 17 herrschende Druck jeweils verschiedene Werte annehmen, können auch Drucksensoren zur Messung des Innen- und des Außendrucks vorgesehen sein.

Nachfolgend ist eine erste Betriebsart des Luftaustauschsystems beschrieben, bei der die Steuerungseinheit nur einen aktiven Eingang hat, nämlich den Eingang des ersten Wohlfühlsensors 29. Die Sensoren 25-28 und 30-31 werden für diese erste Betriebsart nicht benötigt. Bei dieser ersten Betriebsart ist ein $CO_2$-Grenzkonzentrationswer von 1 ml pro 1 l Luft vorgesehen. Dieser Wert kann im Betrieb angepaßt werden.

Zu Beginn befindet sich die Luftaustauschvorrichtung 1 in einem ausgeschalteten Betriebszustand. Dann mißt der erste Wohlfühlsensor 29 einen $CO_2$-Konzentrationswer im Abluftstrom $\dot{V}_{ab}$ 12, der den $CO_2$-Grenzkonzentrationswert überschreitet. Daraufhin schaltet die Steuerungseinheit die Luftaustauschvorrichtung 1 ein, wonach diese einen ersten Lüftungsbetriebszustand annimmt, in dem sich das Zuluft-Lüfterrad 16 und das Fortluft-Lüfterrad 21 jeweils mit einer konstanten Drehfrequenz bewegen und der Abluftstrom $\dot{V}_{ab}$ 12 sowie der Zuluftstrom $\dot{V}_{zu}$ 15 jeweils einen Wert von 20 m³/h annehmen. Diese Werte können im Betrieb angepaßt werden.

In diesem ersten Lüftungsbetriebszustand verweilt die Luftaustauschvorrichtung 1 solange, bis der erste Wohlfühlsensor 29 einen $CO_2$-Konzentrationswert im Abluftstrom $\dot{V}_{ab}$ 12 mißt, der den $CO_2$-Grenzkonzentrationswert wieder unterschreitet. In diesem Fall schaltet die Steuerungseinheit die Luftaustauschvorrichtung 1 aus, so daß die Drehfrequenzen des Zuluft-Lüfterrads 16 sowie des Fortluft-Lüfterrads 21 auf den Wert Null absinken.

Die Steuerungseinheit schaltet die Luftaustauschvorrichtung 1 dann ein bzw. aus, wenn der durch den ersten Wohlfühlsensor 29 gemessene $CO_2$-Konzentrationswer den $CO_2$-Grenzkonzentrationswert über- bzw. unterschreitet. Die Steuerung kann dabei auch so erfolgen, daß die Luftaustauschvorrichtung 1 bei einem Überschreiten eines $CO_2$-Grenzkonzentrationswert eingeschaltet wird und bei einem Unterschreiten dieses $CO_2$-Grenzkonzentrationswerts wieder ausgeschaltet wird. Alternativ dazu können auch Einschalt- bzw. Ausschaltintervalle sowie Mindestlaufzeiten vorgesehen werden.

Nachfolgend ist eine zweite Betriebsart des Luftaustauschsystems beschrieben, bei welcher der erste Innenluftfeuchtigkeitssensor 26 den einzigen aktiven Eingang der Steuerungseinheit bildet. Bei dieser zweiten Betriebsart ist hier ein Maximalwert der relativen Luftfeuchtigkeit von $\varphi_{max}$ = 65% sowie ein Einschaltintervall von T = 1h vorgesehen. Diese Werte können im Betrieb angepaßt werden.

Zu Beginn schaltet die Steuerungseinheit die Luftaustauschvorrichtung 1 ein, wonach diese den bereits beschriebenen ersten Betriebszustand annimmt. In diesem ersten Lüftungsbetriebszustand verweilt die Luftaustauschvorrichtung 1 solange, bis der erste Innenluftfeuchtigkeitssensor 26 eine relative Innenluftfeuchtigkeit $\varphi$ von mehr als $\varphi_{max}$ = 65% mißt. In diesem Fall versetzt die Steuerungseinheit die Luftaustauschvorrichtung 1 in einen zweiten Betriebszustand bzw. schaltet die Luftaustauschvorrichtung 1 aus, so daß die Drehfrequenzen des Zuluft-Lüfterrads 16 sowie des Fortluft-Lüfterrads 21 auf den Wert Null absinken.

Nach Ablauf des Einschaltintervalls von T = 1 h erfolgt eine Einschaltung der Luftaustauschvorrichtung 1 durch die Steuerungseinheit in den zuvor anliegenden ersten Lüftungsbetriebszustand. Liegt dann der von dem ersten Innenluftfeuchtigkeitssensor 26 gemessene Wert der relativen Luftfeuchtigkeit $\varphi$ immer noch über dem Maximalwert von $\varphi_{max}$ = 65%, so wird die Luftaustauschvorrichtung 1 unmittelbar oder nach einer ebenfalls voreinstellbaren Mindestlaufzeit wieder ausgeschaltet.

Bei einer Abwandlung der zweiten Betriebsart umfaßt das Luftaustauschsystem eine Steuerungseinheit mit einem einzigen aktiven Eingang, der mit dem Zuluftfeuchtigkeitssensor 30 verbunden ist. Dabei wird die Luftaustauschvorrichtung 1 in Abhängigkeit der durch den Zuluftfeuchtigkeitssensor 30 gemessenen relativen Feuchtigkeiten $\varphi$ des Zuluftstroms $\dot{V}_{zu}$ 15 ein- und ausgeschaltet bzw. in verschiedene Lüftungsbetriebszustände geschaltet.

Nachfolgend wird eine dritte Betriebsart des Luftaustauschsystems erläutert. Dabei verfügt die Steuerungseinheit nur über zwei Eingänge, von denen der erste mit dem ersten Außenluftfeuchtigkeitssensor 25 und der zweite mit dem ersten Innentemperatursensor 28 verbunden ist. Des weiteren verfügt die Steuerungseinheit über eine integrierte Berechnungseinheit, die aus den gemessenen Werten des ersten Außenluftfeuchtigkeitssensors 25 und des ersten Innentemperatursensors 28 einen zu erwartenden Wert für die relative Luftfeuchtigkeit $\varphi$ des Zuluftstroms $\dot{V}_{zu}$ 15 bestimmt.

Der erste Außenluftfeuchtigkeitssensor 25 ist dabei als Sensor für die absolute Feuchtigkeit der Außenluft $X_{außen}$ ausgebildet und mißt den pro Kilogramm Luft enthaltenen Wasserdampf. Der zu erwartende Luftfeuchtigkeitswert des Zuluftstroms $\dot{V}_{zu}$ 15 wird mit einem vorgegebenen ersten Maximalwert $\varphi_{max,1}$ = 70% verglichen. In Abhängigkeit dieses Vergleichs verweilt die Luftaustauschvorrichtung 1 in dem ersten Lüftungsbetriebszustand oder wird in den zweiten Lüftungsbetriebszustand geschaltet bzw. ausgeschaltet. Ein zweiter Maximalwert $\varphi_{max,2}$ für die Wiederinbetriebnahme der Luftaustauschvorrichtung 1 bzw. für das Versetzen der Luftaustauschvorrichtung 1 in den ersten Lüftungsbetriebszustand beträgt $\varphi_{max,2}$ = 65%. Bei dieser dritten Betriebsart wird davon ausgegangen, daß der Zuluftstrom $\dot{V}_{zu}$ 15 beim Ausströmen aus der Zuluftauslaßöffnung 11 bereits die Temperatur $T_{innen}$ der im Inneren des Wohnhauses 23 befindlichen Luft annimmt.

Zu Beginn befindet sich die Luftaustauschvorrichtung 1 in dem ersten Betriebszustand. Der erste Außenluftfeuchtigkeitssensor 25 mißt nun eine absolute Luftfeuchtigkeit von $X_{außen}$ = 12,3 g Wasser/kg Luft. Diese absolute Luftfeuchtigkeit $X_{außen}$ entspricht einer relativen Luftfeuchtigkeit $\varphi$ = 65% von 24°C warmer Luft. Der erste Innentemperatursensor 28 mißt eine Temperatur $T_{innen}$ = 20°C. Basierend auf diesen beiden Meßwerten kann die Berechnungseinheit den Wert der relativen Luftfeuchtigkeit $\varphi$ des auf 20°C erwärmten Zuluftstroms $\dot{V}_{zu}$ 15 berechnen. Der vorausberechnete Wert für diese relative Luftfeuchtigkeit $\varphi$ ergibt sich aus der Formel:

$$x = 0,622 \cdot \frac{\varphi\, p_s}{p - \varphi\, p_s}$$

zu dem Wert von $\varphi$ = 83%. Dieser Wert für die relative Luftfeuchte $\varphi$ liegt über dem ersten Maximalwert von $\varphi_{max,1}$ = 70%. Dementsprechend wird die erste Luftaustauschvorrichtung 1 von der Steuerungseinheit in den zweiten Betriebszustand versetzt und verharrt solange in diesem zweiten Betriebszustand, bis der vorausberechnete Wert für die relative Luftfeuchtigkeit $\varphi$ des Zuluftstroms $\dot{V}_{zu}$ 15 den zweiten Maximalwert von $\varphi_{max,2}$ = 65% unterschreitet.

In einer vierten Betriebsart des Luftaustauschsystems verfügt die Steuerungseinheit über drei Eingänge, mit denen jeweils der erste Außenluftfeuchtigkeitssensor 25, der erste Außentemperatursensor 27 und der erste Innentemperatursensor 28 verbunden sind.

Der erste Außenluftfeuchtigkeitssensor 25 ist dabei als Sensor für die relative Luftfeuchtigkeit $\varphi_{außen}$ des Außenluftstroms 14 ausgebildet. Aus den von den Sensoren 25, 26 und 28 gemessenen Werten läßt sich die zu erwartende relative Luftfeuchtigkeit $\varphi$ des Zuluftstroms $\dot{V}_{zu}$ 15 mittels dem Fachmann bekannter Formeln bestimmen.

Messen der erste Außentemperatursensor 27 eine Temperatur $T_{außen}$ = 16°C, der erste Innentemperatursensor 28 eine Temperatur $T_{innen}$ = 20°C und der erste Außenluftfeuchtigkeitssensor 25 eine relative Luftfeuchtigkeit $\varphi$ = 96,5%, so läßt sich der Wert der relativen Luftfeuchtigkeit $\varphi_{Vzu,\ 20°C}$ = 75% errechnen, den der Zuluftstrom $\dot{V}_{zu}$ 15 bei einer Temperatur von T = 20°C annimmt. Bei dieser Rechnung wurde zur Vereinfachung die Dichte der Luft als konstant vorausgesetzt.

Dieser Wert für die relative Luftfeuchtigkeit $\varphi_{Vzu,}$ 20°C liegt über dem ersten Maximalwert von $\varphi_{max,1}$ = 70%. Dementsprechend wird die Luftaustauschvorrichtung 1 von der Steuerungseinheit ausgeschaltet und bleibt solange ausgeschaltet, bis der von der Berechnungseinheit vorausberechnete Wert der relativen Luftfeuchtigkeit $\varphi$ des Zuluftstroms $\dot{V}_{zu}$ 15 unter den zweiten Maximalwert von $\varphi_{max,2}$ = 65% sinkt.

In einer fünften Betriebsart des erfindungsgemäßen Luftaustauschsystems sind die Eingänge der Steuerungseinheit mit dem ersten Außenluftfeuchtigkeitssensor 25, mit dem ersten Innenluftfeuchtigkeitssensor 26, mit dem ersten Außentemperatursensor 27 und mit dem ersten Innentemperatursensor 28 verbunden. Bei der vierten Betriebsart wird die relative Luftfeuchtigkeit $\varphi_{innen}$ der gesamten im Gebäudeinneren befindlichen Luft vorausberechnet. Dazu werden von der in der Steuerungseinheit integrierten Berechnungseinheit die Meßwerte der Sensoren 25 bis 28, der Zuluftstrom $\dot{V}_{zu}$ 15 und der Abluftstrom $\dot{V}_{ab}$ 12 sowie das Innenvolumen V=100 m³ des Raums verwendet. Der Zuluftstrom $\dot{V}_{zu}$ 15 und der Abluftstrom $\dot{V}_{ab}$ 12 lassen sich aus den Kennzahlen, insbesondere aus den Drehfrequenzen des Zuluft-Lüfterrads 16 sowie des Fortluft-Lüfterrads 21 bestimmen.

Zu Beginn arbeitet die Luftaustauschvorrichtung 1 im ersten Betriebszustand. Der erste Innentemperatursensor 28 mißt einen Temperaturwert von $T_{innen}$ = 20°C, der erste Außentemperatursensor 27 mißt einen Temperaturwert von $T_{außen}$ = 18°C. Der erste Innenluftfeuchtigkeitssensor 26 mißt eine relative Luftfeuchtigkeit $\varphi_{innen}$ = 65% und der erste Außenluftfeuchtigkeitssensor 25 mißt eine relative Luftfeuchtigkeit $\varphi_{außen}$ = 92%. Aus diesen Werten läßt sich der zu erwartende Innenluftfeuchtigkeitswert $\varphi$ der im Raum befindlichen Luft genau vorhersagen.

Der auf die Innentemperatur $T_{innen}$ = 20°C erwärmte Zuluftstrom $\dot{V}_{zu}$ 15 weist - unter der vereinfachenden Annahme, daß die Dichte der Luft im betrachteten Temperaturintervall konstant ist - eine relative Luftfeuchtigkeit von $\varphi_{Vzu}$ = 81% auf. Der Zuluftstrom $\dot{V}_{zu}$ 15 enthält demnach 12 g Wasser/kg Luft und ist deutlich feuchter als der Abluftstrom $\dot{V}_{ab}$ 12 ausgebildet, der nur einen Wassergehalt von 9,6 g/kg Luft aufweist. Der durch die Luftaustauschvorrichtung 1 erzwungene gleichmäßige Luftaustausch bewirkt somit ein Ansteigen der relativen Luftfeuchtigkeit $\varphi_{innen}$ und der absoluten Luftfeuchtigkeit $X_{innen}$ der im Raum befindlichen Luft.

Dabei wird die Luftaustauschvorrichtung 1 solange weiter in dem ersten Betriebszustand betrieben, bis der vorausberechnete Wert der relativen Luftfeuchtigkeit $\varphi_{innen}$ der im Raum befindlichen Luft den ersten Maximalwert $\varphi_{max,1}$ = 70% überschreitet. Dann wird die Luftaustauschvorrichtung 1 in den zweiten Betriebszustand geschaltet. Aus diesem zweiten Zustand wird die Luftaustauschvorrichtung 1 erst dann wieder in Betrieb genommen, wenn die vorausberechnete relative Luftfeuchtigkeit $\varphi_{innen}$ der im Raum befindlichen Luft den zweiten Maximalwert wieder $\varphi_{max,2}$ = 65% unterschreitet.

Die dafür notwendige zeitliche Vorausberechnung der relativen Luftfeuchtigkeit $\varphi_{innen}$ der im Raum befindlichen Luft ist dem Fachmann bekannt und braucht hier nicht näher erläutert zu werden.

In einer Variante der dritten, der vierten und der fünften Betriebsart kann ein Zeitintervall vorgegeben sein, nach dem jeweils eine automatische Wiedereinschaltung der Luftaustauschvorrichtung 1 durch die Steuerungseinheit erfolgt. Dies wird auch als "Schnuppermodus" bezeichnet.

Die sechste Betriebsart stellt eine Weiterentwicklung der vorstehend beschriebenen Betriebsarten dar, bei der jeweils der erste Wohlfühlsensor 29 mit einem weiteren Eingang der Steuerungseinheit verbunden ist. Über eine Eingabemöglichkeit bzw. über ein Auswahldisplay an der Steuerungseinheit kann ein Benutzer eine Auswahl der Betriebsarten treffen.

Dabei kann auch eine Kombination mehrerer Betriebsarten ausgewählt werden, beispielsweise eine Kombination der Steuerung der Luftaustauschvorrichtung 1 in Abhängigkeit der gemessenen Spurengaskonzentrationen gemäß der ersten Betriebsart und in Abhängigkeit der gemessenen bzw. vorausberechneten Luftfeuchtigkeiten gemäß der zweiten, dritten, vierten oder fünften Betriebsart. Hierbei kann auch eine Priorisierung einzelner Betriebsarten durch den Benutzer erfolgen, beispielsweise kann die spurengaskonzentrationsabhängige Steuerung gegenüber der luftfeuchtigkeitsabhängigen Steuerung priorisiert werden. Bei einer solchen Prioritätssteuerung kann die Luftaustauschvorrichtung 1 beispielsweise auch im Falle des Überschreitens einen vorbestimmten Grenzwerts $\varphi_{max}$ durch die gemessene oder vorausberechnete Luftfeuchtigkeit $\varphi$ dann weiter arbeiten, wenn gleichzeitig eine zu hohe Spurengaskonzentration durch den ersten Wohlfühlsensor 29 gemessen wird.

In den vorgehend beschriebenen Betriebsarten des erfindungsgemäßen Luftaustauschsystems wird jeweils der Fall betrachtet, daß relativ feuchte Außenluft in das Gebäudeinnere gelangt und daß bei einem ungewollten Ansteigen der Luftfeuchtigkeit $\varphi$ die Luftaustauschvorrichtung 1 in einen Pausezustand versetzt wird.

Das erfindungsgemäße Luftaustauschsystem ist analog der letztgenannten Betriebsarten auch einsetzbar, wenn ein unerwünschtes Absinken der relativen Luftfeuchtigkeit $\varphi$ des Zuluftstroms $\dot{V}_{zu}$ 15 und/oder der im Gebäudeinneren befindlichen Luft verhindert werden soll. Dabei ist beispielsweise ein erster Minimalwert von $\varphi_{min,1}$ = 40% für das Ausschalten der Luftaustauschvorrichtung 1 und ein zweiter Minimalwert $\varphi_{min,1}$ = 45% für die Wiederinbetriebnahme der erfindungsgemäßen Luftaustauschvorrichtung 1 vorsehbar.

Die Betriebsarten des Luftaustauschsystems zum Verhindern des unerwünschten Ansteigens der relativen Luftfeuchte $\varphi$ des Zuluftstroms $\dot{V}_{zu}$ 15 und/oder der im Gebäudeinneren befindlichen Luft entsprechen dabei weitgehend den bereits dargelegten Betriebsarten und ergeben sich für einen Fachmann aus den vorstehenden Erläuterungen.

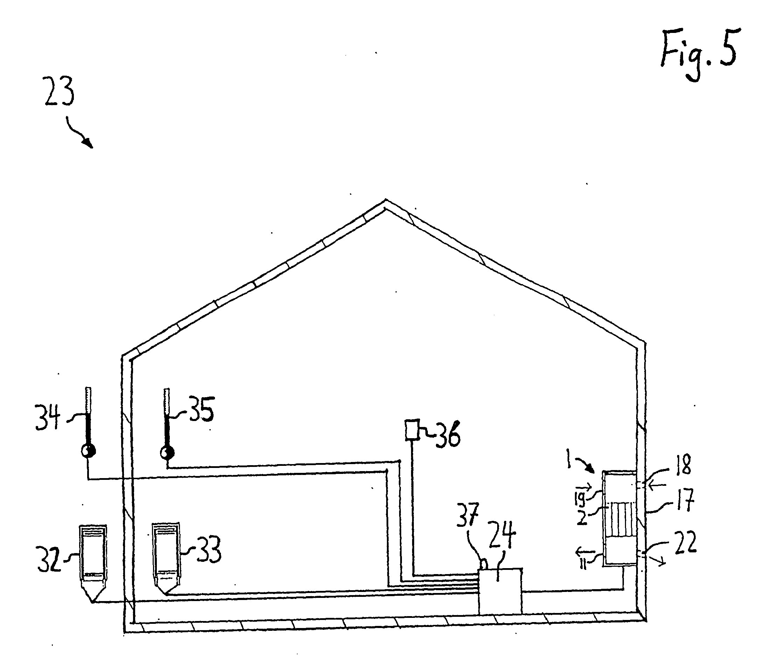

Figur 5 zeigt eine schematische Darstellung eines Wohnhauses 23 sowie eines in dem Wohnhaus 23 angeordneten Luftaustauschsystems.

Das Luftaustauschsystem gliedert sich in eine Steuerungseinheit 24 mit einer Kontroll-Leuchte 37, in einen zweiten Außenluftfeuchtigkeitssensor 32, in einen zweiten Innenluftfeuchtigkeitssensor 33, in einen zweiten Außentemperatursensor 34, in einen zweiten Innentemperatursensor 35, in einen zweiten Wohlfühlsensor 36 sowie in die Luftaustauschvorrichtung 1, die - wie bereits in den Figuren 3 und 4 gezeigt - an der Außenwand 17 des Wohnhauses 23 befestigt ist.

Das in Figur 5 dargestellte Luftaustauschsystem entspricht weitgehend dem beschriebenen Luftaustauschsystem, wobei die Sensoren 32-36 jeweils außerhalb des Gehäuses 3 angeordnet sind. Der zweite Außenluftfeuchtigkeitssensor 32 mißt die relative Luftfeuchtigkeit φ der auf der Außenseite des Wohnhauses 23 befindlichen Luft und ist mit einem ersten Eingang der Steuerungseinheit 24 verbunden. Der zweite Innenluftfeuchtigkeitssensor 33 mißt die relative Luftfeuchtigkeit φ der in dem Wohnhaus 23 befindlichen Luft und ist mit einem zweiten Eingang der Steuerungseinheit 24 verbunden. Der zweite Außentemperatursensor 34 mißt die Temperatur der Außenluft und ist mit einem weiteren Eingang der Steuerungseinheit 24 verbunden. Der zweite Innentemperatursensor 35 mißt die Innentemperatur und ist mit einem weiteren Eingang der Steuerungseinheit 24 verbunden. Der zweite Wohlfühlsensor 36 mißt Spurengaskonzentrationen in der in dem Wohnhaus 23 befindlichen Luft und ist mit einem weiteren Eingang der Steuerungseinheit 24 verbunden. Die Luftaustauschvorrichtung 1 ist mit dem Ausgang der Steuerungseinheit 24 verbunden.

Die Betriebsarten des in Figur 5 dargestellten Luftaustauschsystems entsprechen den bereits erläuterten Betriebsarten. Dabei leuchtet zusätzlich eine Kontroll-Leuchte 37 auf, wenn sich die Luftaustauschvorrichtung 1 in einem Pausezustand bzw. in dem ersten Lüftungsbetriebszustand befindet.

**Patentansprüche**

1. Luftaustauschsystem für die Belüftung wenigstens eines Raums eines Gebäudes mit wenigstens einer Luftaustauschvorrichtung (1), die ein Gehäuse (3), einen in dem Gehäuse (3) angeordneten elektrischen Zuluft-Lüfter (10) zur Förderung eines Zuluftstroms (15) von der Außenseite in das Innere des Gebäudes (23), einen in dem Gehäuse (3) angeordneten elektrischen Fortluft-Lüfter (6) zur Förderung eines Abluftstroms (12) aus dem Inneren auf die Außenseite des Gebäudes (23) sowie einen Wärmetauscher (2) aufweist, dessen Erwärm- bzw. Abkühlseite von dem Zuluftstrom (15) und dessen Abkühlbzw. Erwärmseite von dem Abluftstrom (12) durchströmt werden, wobei wenigstens ein zur Anordnung im Inneren des Gebäudes bestimmter oder in dem Gehäuse (3), insbesondere nahe einer Ablufteinlaßöffnung (19) des Gehäuses (3) angeordneter Spurengassensor (29; 36) vorgesehen ist, wobei der Zuluft-Lüfter (10) und/oder der Fortluft-Lüfter (6) in Abhängigkeit der von dem Spurengassensor (29; 36) bzw. der von den Spurengassensoren (29;

36) gemessenen Spurengas-Konzentrationen Betriebszustände mit vorbestimmten Drehfrequenzen einnehmen,
**dadurch gekennzeichnet, dass**
der Zuluft-Lüfter (10) in vorgegebenen Zeitintervallen automatisch in einen Lüftungsbetriebszustand mit einer vorgegebenen Drehfrequenz versetzbar ist.

2. Luftaustauschsystem nach einem der vorhergehenden Ansprüche,
**dadurch gekennzeichnet, dass**
die Drehfrequenz und/oder der Anstellwinkel der Lüfterblätter des Zuluft-Lüfters (10) sowie des Fortluft-Lüfters (6) so einstellbar sind, dass sie einen tageszeitabhängigen Luftfeuchtigkeitsverlauf und Temperaturverlauf im Inneren des Gebäudes (23) berücksichtigen.

3. Luftaustauschsystem nach einem der vorhergehenden Ansprüche,
**dadurch gekennzeichnet, dass**
die Luftaustauschvorrichtung (1) ferner eine Kontroll-Leuchte (37) aufweist, die aufleuchtet, wenn der Zuluft-Lüfter (10) abgeschaltet ist.

4. Luftaustauschsystem nach einem der vorhergehenden Ansprüche mit einem Außenluftzufuhrrohr (18) einer Wand des Gebäudes (23),
**dadurch gekennzeichnet, dass**
beim Außenluftzufuhrrohr (18), durch das der Außenluftstrom (14) in das Innere des Gebäudes (23) hereinströmt, oder um dieses Außenluftzufuhrrohr (18) herum eine Isolierung vorgesehen ist.

5. Verfahren zur Belüftung wenigstens eines Raums eines Gebäudes
mit wenigstens einer Luftaustauschvorrichtung (1), die ein Gehäuse (3) enthält,
und mit folgenden Schritten:

   - Fördern eines Zuluftstroms (15) von der Außenseite in das Innere des Gebäudes (23) mit einem in dem Gehäuse (3) angeordneten elektrischen Zuluft-Lüfter (10),
   - Fördern eines Abluftstroms (12) aus dem Inneren auf die Außenseite des Gebäudes (23) mit einem in dem Gehäuse (3) angeordneten elektrischen Fortluft-Lüfter (6)
   - Betreiben eines Wärmetauscher (2), dessen Erwärm- bzw. Abkühlseite von dem Zuluftstrom (15) und dessen Abkühl- bzw. Erwärmseite von dem Abluftstrom (12) durchströmt werden,
   - Betreiben eines Spurengassensors, wobei der Spurengassensor im Inneren des Gebäudes oder in dem Gehäuse (3), insbesondere nahe einer Ablufteinlaßöffnung (19) des Gehäuses (3), angeordnet ist,

- Einnehmen von vorbestimmten Drehfrequenzen der Zuluft-Lüfter (10) und/oder der Fortluft-Lüfter (6) in Abhängigkeit der von dem Spurengassensor (29; 36) bzw. der von den Spurengassensoren (29; 36) gemessenen Spurengas-Konzentrationen,

wobei
der Zuluft-Lüfter (10) in vorgegebenen Zeitintervallen automatisch in einen Lüftungsbetriebszustand mit einer vorgegebenen Drehfrequenz versetzt wird.

## Claims

1. Air exchange system for ventilating at least one room of a building having at least one air exchange device (1) which has a housing (3), an electric incoming air fan (10) positioned in the housing (3) for conveying an incoming air flow (15) from the exterior to the interior of the building (23), an electric discharge air fan (6) positioned in the housing (3) for conveying an outgoing air flow (12) from the interior to the exterior of the building (23) and a heat exchanger (2), the incoming air flow (15) flowing through the heating/cooling side and the outgoing air flow (12) flowing through the cooling/heating side of said heat exchanger (2), there being provided at least one trace gas sensor (29; 36) intended for positioning in the interior of the building or positioned in the housing (3), in particular near an outgoing air inlet opening (19) in the housing (3), the incoming air fan (10) and/or the discharge air fan (6) assuming operating modes with predetermined rotation frequencies dependent on the trace gas concentrations measured by the trace gas sensor (29; 36) or trace gas sensors (29;36),
   **characterised in that**
   the incoming air fan (10) can be switched automatically to a ventilation operating mode with a predetermined rotation frequency at predetermined time intervals.

2. Air exchange system in accordance with one of the preceding claims,
   **characterised in that**
   the rotation frequency and/or the angle of incidence of the fan blades of the incoming air fan (10) and the discharge air fan (6) can be adjusted in such a manner that they take into account a time-of-day-dependent air humidity progression and temperature progression in the interior of the building (23).

3. Air exchange system in accordance with one of the preceding claims,
   **characterised in that**
   the air exchange device (1) also has a pilot light (37) which lights up when the incoming air fan (10) is switched off.

4. Air exchange system in accordance with one of the preceding claims having an exterior air supply pipe (18) in a wall of the building (23),
   **characterised in that**
   insulation is provided at the exterior air supply pipe (18) through which the exterior air flow (14) flows into the interior of the building (23), or around said exterior air supply pipe (18).

5. Process for ventilating at least one room of a building with at least one air exchange device (1) which contains a housing (3) and with the following steps:

   - conveyance of an incoming air flow (15) from the exterior to the interior of the building (23) with an electric incoming air fan (10) positioned in the housing (3),
   - conveyance of an outgoing air flow (12) from the interior to the exterior of the building (23) with an electric discharge air fan (6) positioned in the housing (3),
   - operation of a heat exchanger (2), the incoming air flow (15) flowing through the heating/cooling side and the outgoing air flow (12) flowing through the cooling/heating side of said heat exchanger (2),
   - operation of a trace gas sensor, said trace gas sensor being positioned in the interior of the building or in the housing (3), in particular near an outgoing air inlet opening (19) in the housing (3),
   - assumption by the incoming air fan (10) and/or the discharge air fan (6) of predetermined rotation frequencies dependent on the trace gas concentrations measured by the trace gas sensor (29; 36) or trace gas sensors (29; 36), the incoming air fan (10) being switched automatically to a ventilation operating mode with a predetermined rotation frequency at predetermined time intervals.

## Revendications

1. Système de renouvellement d'air pour ventiler au moins une pièce d'un bâtiment avec au moins un dispositif de renouvellement d'air (1), qui présente une enveloppe (3), un ventilateur électrique de refoulement d'air (10), disposé dans l'enveloppe (3), pour générer un flux d'air neuf (15) de l'extérieur vers l'intérieur du bâtiment (23), un ventilateur électrique d'aspiration d'air (6) disposé dans l'enveloppe (3), pour générer un flux d'air vicié (12) de l'intérieur vers l'extérieur du bâtiment (23), ainsi qu'un échangeur de chaleur (2), dont le côté chauffage respectivement refroidissement est parcouru par le flux d'air neuf (15) et dont le côté refroidissement respectivement chauffage est parcouru par le flux d'air vicié (12), sachant qu'il est prévu au moins un capteur de gaz à l'état de traces (29 ; 36), destiné à être disposé à l'intérieur du bâtiment ou disposé dans l'enveloppe (3), en particulier à proximité d'une ouverture d'admission d'air vicié (19) de l'enveloppe (3), sachant que le ventilateur de refoulement d'air (10) et/ou le ventilateur d'aspiration d'air (6) adopte des états fonctionnels avec des fréquences de rotation prédéterminées en fonction des concentrations de gaz à l'état de traces mesurées par le capteur de gaz à l'état de traces (29 ; 36) ou par les capteurs de gaz à l'état de traces (29 ; 36), **caractérisé en ce que** le ventilateur de refoulement d'air (10) peut être mis automatiquement dans un état fonctionnel de ventilation avec une fréquence de rotation prédéfinie à des intervalles de temps prédéfinis.

2. Système de renouvellement d'air selon la revendication précédente, **caractérisé en ce que** la fréquence de rotation et/ou l'angle d'incidence des pales du ventilateur de refoulement d'air (10) et du ventilateur d'aspiration d'air (6) peuvent être réglés de manière à prendre en compte l'évolution de l'humidité de l'air et l'évolution de la température à l'intérieur du bâtiment (23) en fonction de l'heure de la journée.

3. Système de renouvellement d'air selon l'une quelconque des revendications précédentes, **caractérisé en ce que** le dispositif de renouvellement d'air (1) présente en outre un témoin lumineux (37) qui s'allume lorsque le ventilateur de refoulement d'air (10) s'arrête.

4. Système de renouvellement d'air selon l'une quelconque des revendications précédentes, comportant un tuyau d'alimentation en air extérieur (18) d'une paroi du bâtiment (23), **caractérisé en ce que**, chez le tuyau d'alimentation en air extérieur (18) grâce auquel le flux d'air extérieur (14) pénètre à l'intérieur du bâtiment (23), ou, autour de ce tuyau d'alimentation en air extérieur (18), est prévue une isolation.

5. Procédé permettant de ventiler au moins une pièce d'un bâtiment avec au moins un dispositif de renouvellement d'air (1), qui contient une enveloppe (3), et comprend les étapes consistant à :

- alimenter un flux d'air neuf (15) de l'extérieur vers l'intérieur du bâtiment (23) avec un ventilateur électrique de refoulement d'air (10) disposé dans l'enveloppe (3),
- alimenter un flux d'air vicié (12) de l'intérieur vers l'extérieur du bâtiment (23), avec un ventilateur électrique d'aspiration d'air (6) disposé dans l'enveloppe (3),
- actionner un échangeur de chaleur (2), dont le côté chauffage respectivement refroidissement est parcouru par le flux d'air neuf (15) et dont le côté refroidissement respectivement chauffage est parcouru par le flux d'air vicié (12),
- actionner un capteur de gaz à l'état de traces, le capteur de gaz à l'état de traces étant disposé à l'intérieur du bâtiment ou dans l'enveloppe (3), en particulier à proximité d'une ouverture d'admission d'air vicié (19) de l'enveloppe (3),
- faire en sorte que le ventilateur de refoulement d'air (10) et/ou le ventilateur d'aspiration d'air (6) adopte des fréquences de rotation prédéterminées en fonction des concentrations des gaz à l'état de traces mesurées par le capteur de gaz à l'état de traces (29 ; 36) ou par les capteurs de gaz à l'état de traces (29 ; 36),

le ventilateur de refoulement d'air (10) passant automatiquement à un état fonctionnel de ventilation avec une fréquence de rotation prédéfinie à des intervalles de temps prédéfinis.

Fig. 1

Fig.2

A-A

Fig. 3

B-B

Fig. 4

Fig.5

EP 1 554 526 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2373849 A
- WO 0184057 A1
- US 5761908 A
- US 5257736 A
- DE 4404477 A1